# EUROPÄISCHE PATENTSCHRIFT

(11) **EP 4 360 914 B1**
(45) Veröffentlichungstag und Bekanntmachung des Hinweises auf die Patenterteilung: **26.03.2025**
(21) Anmeldenummer: 23198970.8
(22) Anmeldetag: 22.09.2023
(51) Int. Cl.: B60C 11/03, B60C 11/12, B60C 11/13

(54) **FAHRZEUGLUFTREIFEN**
PNEUMATIC TYRE FOR VEHICLES
BANDAGE PNEUMATIQUE POUR VÉHICULE

(30) Priorität: 26.10.2022 DE 102022211346
(43) Veröffentlichungstag der Anmeldung: 01.05.2024
(73) Patentinhaber: Continental Reifen Deutschland GmbH, 30175 Hannover (DE)
(72) Erfinder: Schlittenhard, Jan, 30165 Hannover (DE); Wackerhage, Tanja, 30165 Hannover (DE); Spechtmeyer, Torben, 30165 Hannover (DE); Kott, Burkhard, 30165 Hannover (DE); Bauer, Claudia, 30165 Hannover (DE); Pang-Jian-Xiang, Edwin, 30165 Hannover (DE)
(74) Vertreter: Continental Corporation

(56) Entgegenhaltungen:
- EP-A1- 3 551 476
- EP-A1- 3 589 500
- EP-B1- 2 501 561
- FR-A1- 3 026 347
- FR-A1- 3 111 292
- JP-B2- 3 720 519
- US-A1- 2020 039 298

## Beschreibung

Die Erfindung betrifft Fahrzeugluftreifen mit einem Laufstreifen mit Profilblöcken, welche von auf Profiltiefe reichenden Schrägrillen und von Rillen begrenzt sind, welche Rillen zwischen in Umfangsrichtung aufeinanderfolgenden Schrägrillen ausgebildet sind, insbesondere bezüglich der Umfangsrichtung gegensinnig zu den Schrägrillen geneigt verlaufen und an den Schrägrillen Rillenenden aufweisen und zu welchen Rillen gehören, die jeweils eine Breite von 3,0 mm bis 10,0 mm, eine maximale Tiefe von 65% bis 100% der Profiltiefe, von der Laufstreifenperipherie ausgehende Rillenflanken und einen in ihrer maximalen Tiefe verlaufenden, in die Schrägrillen einmündenden Rillenpfad aufweisen, welcher sich in Draufsicht schräg durch die jeweilige Rille hindurcherstreckt und zwischen einer entlang der einen Rillenflanke ausgebildeten Grundanhebung und einer entlang der anderen Rillenflanke ausgebildete Grundanhebung verläuft, wobei jede Grundanhebung in radialer Richtung durch eine Außenfläche begrenzt ist, welche, im in Draufsicht senkrecht zur Mittellinie der Rille verlaufenden Querschnitt betrachtet, parallel zur Laufstreifenperipherie verläuft und eine von dem einen Rillenende zum anderen Rillenende kontinuierlich abnehmende Breite aufweist.

Ein derartiger Fahrzeugluftreifen ist beispielsweise aus der EP 2 501 561 B1 bekannt. Der Fahrzeugluftreifen weist beim beschriebenen Ausführungsbeispiel einen Laufstreifen mit schulterseitigen Profilblöcken, halbmittigen Profilblöcken und mittigen Profilblöcken auf, wobei die Profilblöcke von bis auf Profiltiefe ausgeführten Schrägrillen und zwischen den Schrägrillen verlaufenden Rillen begrenzt sind. Die Rillen weisen eine Breite von beispielsweise 3,0 mm und eine maximale Tiefe ("Nuttiefe T_{N}") auf, welche vorzugsweise um 3,5 mm geringer ist als die Profiltiefe, wobei die Profiltiefe 8,0 mm bis 10,0 mm beträgt. Die maximale Tiefe der Rillen beträgt somit bei einer Profiltiefe von 8,0 mm zirka 56% der Profiltiefe und bei einer Profiltiefe von 10,0 mm 65% der Profiltiefe. Die Rillen sind, im Querschnitt betrachtet, durch einen parallel zur Laufstreifenperipherie verlaufenden Rillengrund und zwei in radialer Richtung verlaufende Rillenwände begrenzt. Am Rillengrund jeder Rille ist ein einschnittartiger Rillenpfad mit einer Breite von 0,4 mm bis 1,5 mm ("Nut") ausgebildet, der sich zwischen zwei Grundanhebungen in Draufsicht schräg durch die Rille hindurcherstreckt und die Rille über ihre gesamte Breite quert. Jede Grundanhebung ist in radialer Richtung durch eine parallel zur Laufstreifenperipherie verlaufende dreieckige Außenfläche begrenzt. Der Reifen soll einen geringen Rollwiderstand und ein gleichmäßiges Abriebverhalten aufweisen.

Bei Fahrzeugluftreifen der eingangs genannten Art sorgen die erwähnten Grundanhebungen für eine Erhöhung der Steifigkeit der Profilblöcke. Die Ausbildung eines zwischen den Grundanhebungen verlaufenden Rillenpfads, welcher auch als "Teilernut" bezeichnet wird, ist beim Abrollen des Reifens am Untergrund vorteilhaft, da eine eingeschränkte Beweglichkeit der Profilblöcke beim Abplatten erhalten bleibt, was beispielsweise zur Aufrechterhaltung eines geringen Rollwiderstands beiträgt. Bei derartigen Grundanhebungen ist dabei stets darauf zu achten, dass ein gutes Wasserdrainagevermögen der Rillen erhalten bleibt und die Gefahr, dass sich in den Rillen Steine, insbesondere von Rollsplitt oder Streusplitt stammende Steine, verfangen (sog. "stone trapping"), möglichst nicht erhöht wird.

Der Erfindung liegt daher die Aufgabe zu Grunde, bei einem Fahrzeugluftreifen der eingangs genannten Art, im Bereich der Rillen das Wasserdrainagevermögen zu erhöhen und die Gefahr von "stone trapping" merklich zu reduzieren.

Gelöst wird die gestellte Aufgabe erfindungsgemäß dadurch, dass die Außenfläche jeder Grundanhebung, in Längsschnitten der Rille betrachtet, derart relativ zur Laufstreifenperipherie unter einem Winkel geneigt verläuft, dass die Rille im Bereich der Außenfläche eine in radialer Richtung ermittelte Tiefe aufweist, welche mit abnehmender Breite der Außenfläche kontinuierlich zunimmt.

Die Außenflächen der Grundanhebungen, welche gleichzeitig den Rillengrund der Rille bilden, fallen somit in zueinander entgegengesetzten Erstreckungsrichtungen der Rille ab. Durch diese Ausgestaltung ist die Wahrscheinlichkeit, dass sich in den Rillen Steine verfangen, merklich reduziert. Gleichzeitig wird von den Rillen aufgenommenes Wasser besonders zügig in die Schrägrillen abgeleitet, sodass das Wasserdrainagevermögen in den Rillen erhöht ist.

Gemäß einer ersten bevorzugten Ausführung weist die Außenfläche jeder Grundanhebung an jenem Rillenende, an welchem die Tiefe der Rille am kleinsten ist, zum Niveau der Profiltiefe einen in radialer Richtung ermittelten größten Abstand von 10% bis 90%, insbesondere von 15% bis 70%, bevorzugt von 20% bis 50%, der Profiltiefe auf. Ein derartiger Abstand sorgt dafür, dass die Wahrscheinlichkeit, dass sich in der Rille Steine verfangen weiter reduziert ist. Die angegebenen Obergrenzen des größten Abstands sind für das Wasserdrainagevermögen der Rille vorteilhaft.

Eine vorteilhafte Ausgestaltung der ersten bevorzugten Ausführung besteht darin, dass die Außenfläche jeder Grundanhebung an jenem Rillenende, an welchem die Tiefe der Rille am größten ist, zum Niveau der Profiltiefe einen in radialer Richtung ermittelten kleinsten Abstand von bis zu 60%, bevorzugt von bis zu 50%, des größten Abstands aufweist. Das Verhältnis des kleinsten Abstands zum größten Abstand spezifiziert den bei der Lösung der Aufgabe erwähnten Winkel, unter welchem die Außenfläche relativ zur Laufstreifenperipherie geneigt verläuft, wobei die angegebenen Abstände zu einer Verbesserung des Wasserdrainageverhaltens in der Rille beitragen.

Gemäß einer weiteren bevorzugten Ausführung, welche das Wasserdrainageverhalten in der Rille zusätzlich verbessert, verläuft der Rillenpfad, in Draufsicht betrachtet, gerade.

Bei der zuletzt erwähnten Ausführung ist es bevorzugt, wenn sich der Rillenpfad derart schräg durch die Rille hindurcherstreckt, dass die Außenfläche jeder Grundanhebung, in Draufsicht betrachtet, die Form eines rechtwinkeligen Dreieckes aufweist.

Eine weitere bevorzugte Ausführung ist dadurch gekennzeichnet, dass die Rille an der Laufstreifenperipherie eine laufstreifenaußenseitige Rillenkante und eine laufstreifeninnenseitige Rillenkante sowie ferner ein laufstreifenaußenseitiges Rillenende und ein laufstreifeninnenseitiges Rillende aufweist,
- wobei die Breite der Außenfläche der Grundanhebung, welche entlang der von der laufstreifenaußenseitigen Rillenkante ausgehenden Rillenflanke ausgebildet ist, vom laufstreifenaußenseitigen Rillenende zum laufstreifeninnenseitigen Rillende abnimmt und
- wobei die Breite der Außenfläche der Grundanhebung, welche entlang der von der laufstreifeninnenseitigen Rillenkante ausgehenden Rillenflanke ausgebildet ist, vom laufstreifeninnenseitigen Rillenende zum laufstreifenaußenseitigen Rillenende abnimmt.

Bei der zuletzt genannten bevorzugten Ausführung ist es von Vorteil, wenn der Laufstreifen laufrichtungsgebunden ausgeführt ist, wobei das laufstreifenaußenseitige Rillenende ein beim Abrollen des Reifens bei Vorwärtsfahrt zuerst in den Untergrund eintretendes, einlaufendes Rillenende und das laufstreifeninnenseitige Rillenende ein auslaufendes Rillenende ist.

Gemäß einer weiteren bevorzugten Ausführung verlaufen die Rille und der Rillenpfad, in Draufsicht betrachtet, bezogen auf ihre Mittellinien, gerade und bezüglich der Umfangsrichtung gleichsinnig zueinander geneigt, wodurch die Wasserdrainage in der Rille weiter verbessert ist.

Bei der zuletzt erwähnten Ausführung besteht eine vorteilhafte Weiterbildung darin, dass die Rille und der Rillenpfad, in Draufsicht betrachtet, bezogen auf ihre Mittellinien, zur Umfangsrichtung jeweils unter einem Winkel verlaufen, wobei der Winkel, unter welchem der Rillenpfad zur Umfangsrichtung verläuft, kleiner ist als der Winkel, unter welchem die Rille zur Umfangsrichtung verläuft. Der Rillenpfad ist daher weniger stark zur Umfangsrichtung geneigt als die Rille, wodurch das Wasserdrainageverhalten im Bereich des Rillenpfads weiter verbessert ist.

Gemäß einer bevorzugten Variante der zuvor erläuterten, vorteilhaften Weiterbildung beträgt der Winkel, unter welchem die Rille zur Umfangsrichtung verläuft, 15° bis 40°, insbesondere von 18° bis 35°.

Eine weitere bevorzugte Ausführung sieht vor, dass die Außenfläche jeder Grundanhebung bis zum Rillenpfad reicht und an diesem eine Begrenzungskante aufweist, entlang welcher die Breite der Außenfläche kontinuierlich abnimmt. Die scharfen Begrenzungskanten tragen dazu bei, dass die Wahrscheinlichkeit, dass sich im Rillenpfad Steine verklemmen, weiter reduziert ist.

Eine vorteilhafte Ausgestaltung der zuletzt genannten bevorzugten Ausführung besteht darin, dass der Rillenpfad eine in Draufsicht senkrecht zu seiner Mittellinie ermittelte, auf die Begrenzungskanten bezogene konstante Breite von 0,5 mm bis 1,5 mm, insbesondere von 0,8 mm bis 1,2 mm, aufweist. Ein derart ausgeführter Rillenpfad ist für die Wasserdrainage vorteilhaft, wobei sich die entsprechenden Profilblöcke über die an den Rillenpfad angrenzenden Grundanhebungen beim Abrollen des Reifens am Untergrund besonders gut aneinander abstützen.

Gemäß einer weiteren bevorzugten Ausführung sind die Grundanhebungen, in Draufsicht betrachtet, bezüglich des Mittelpunkts der Mittellinie des Rillenpfads punktsymmetrisch ausgeführt.

Eine weitere bevorzugten Ausführung sieht vor, dass zu den von den Rillen begrenzten Profilblöcken schulterseitige Profilblöcke gehören, wobei die schulterseitigen Profilblöcke vorzugsweise mit in Draufsicht bezüglich der Umfangsrichtung gleichsinnig zu den Schrägrillen geneigt verlaufenden, in die Rillen einmündenden Einschnitten mit einer Breite von 0,4 mm bis 1,6 mm, insbesondere von bis zu 1,2 mm, und einer maximalen Tiefe von 70% bis 100% der Profiltiefe versehen sind. Solche schulterseitigen Profilblöcke sind bekannter Weise für die Griffeigenschaften auf nasser sowie auf mit Schnee und/oder Eis bedeckter Fahrbahn günstig. Die durch die Einschnitte voneinander getrennten Blocksegmente der schulterseitigen Profilblöcke sind von den in den Rillen ausgebildeten Grundanhebungen besonders vorteilhaft abgestützt und versteift.

Eine weitere bevorzugte Ausführung ist dadurch gekennzeichnet, dass zu den von den Rillen begrenzten Profilblöcken Profilblöcke gehören, welche in jeder Umfangsrichtung gemeinsam von einer der Schrägrillen begrenzt sind, wobei zwischen den Schrägrillen eine der Rillen verläuft, wobei die Profilblöcke vorzugsweise mit in Draufsicht bezüglich der Umfangsrichtung gleichsinnig zu den Schrägrillen geneigt verlaufenden, in die Rillen einmündenden Einschnitten mit einer Breite von 0,4 mm bis 1,6 mm, insbesondere von bis zu 1,2 mm, und einer maximalen Tiefe von 70% bis 100% der Profiltiefe versehen sind. Solche Profilblöcke sind für die Griffeigenschaften auf nasser sowie auf mit Schnee und/oder Eis bedeckter Fahrbahn von Vorteil.

Weitere Merkmale, Vorteile und Einzelheiten der Erfindung werden nun anhand der Zeichnung, die schematisch ein Ausführungsbeispiel der Erfindung zeigt näher beschrieben. Dabei zeigen
Fig. 1 eine vereinfachte Draufsicht auf einen in die Ebene abgewickelten schulterseitigen Ausschnitt eines Laufstreifens eines Fahrzeugluftreifens mit einer Ausführungsvariante der Erfindung,
Fig. 2 eine vergrößerte Draufsicht auf das Detail Z₂ der Fig. 1,
Fig. 3 einen Schnitt entlang der Linie III-III der Fig. 2 und
Fig. 4 einen Schnitt entlang der Linie IV-IV der Fig. 2.

Gemäß der Erfindung ausgeführte Fahrzeugluftreifen sind Reifen für Kraftfahrzeuge, insbesondere für mehrspurige Kraftfahrzeuge, bevorzugt für Personenkraftwagen (PKWs), Vans (Transporter) oder SUVs, sowie vorzugsweise Reifen in Radialbauart für Felgen mit einem ganzzahligen Felgendurchmesser von 13 bis 24 Zoll.

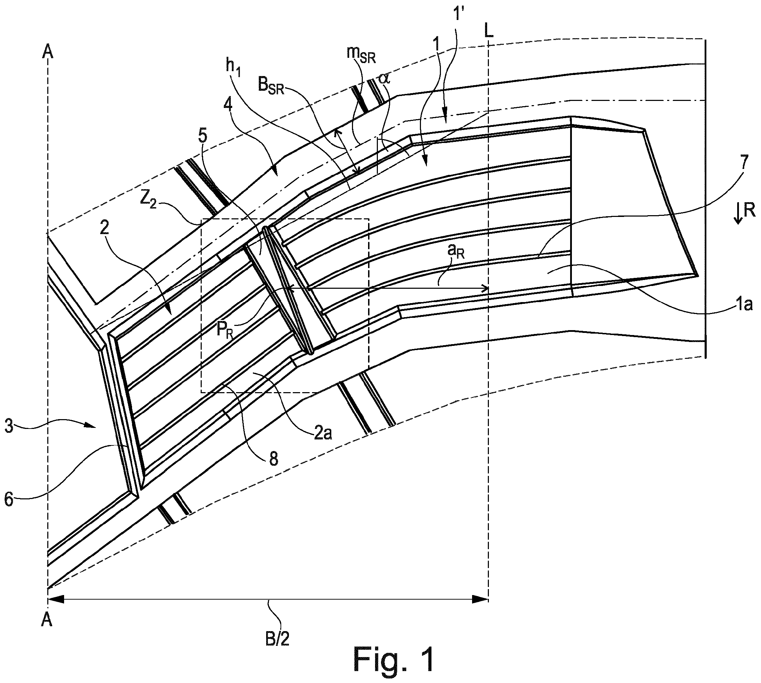

Fig. 1 zeigt eine Draufsicht auf einen Ausschnitt eines Laufstreifens eines Fahrzeugluftreifens. Die Reifenäquatorialebene ist durch eine Linie A-A und der eine seitliche Rand der Bodenaufstandsfläche des Laufstreifens ist durch eine Linie L gekennzeichnet. Die Bodenaufstandsfläche entspricht dem statisch ermittelten Footprint (ermittelt mit einem auf einer Normfelge montierten Reifen, Last bei 70 % der maximalen Tragfähigkeit, Innendruck 85 % des Normdrucks, gemäß ETRTO-Standards) und weist in axialer Richtung eine Breite B auf (in Fig. 1 ist B/2 eingezeichnet). Der Laufstreifen weist eine laufrichtungsgebundene Profilierung auf, wobei der Fahrzeugluftreifen derart am Fahrzeug zu montieren ist, dass er die durch den Pfeil R angedeutete Abrollrichtung bei Vorwärtsfahrt aufweist.

Der Laufstreifen weist im gezeigten Laufstreifenausschnitt einen schulterseitigen Profilblock 1, einen von der Reifenäquatorialebene (Linie A-A) beabstandeten, halbmittigen Profilblock 2, welcher dem schulterseitigen Profilblock 1 zugeordnet und zu diesem benachbart ist, und einen von der Reifenäquatorialebene (Linie A-A) insbesondere geschnittenen, mittigen Profilblock 3 auf. Über den Umfang des Laufstreifens ist jeweils eine Vielzahl von Profilblöcken 1, 2, 3 vorgesehen, wobei die schulterseitigen Profilblöcke 1 eine in Umfangsrichtung umlaufende schulterseitige Profilblockreihe 1' bilden. Die in Umfangsrichtung zu den Profilblöcken 1, 2, 3 benachbart ausgebildeten Profiblöcke sind in Fig. 1 lediglich angedeutet.

Die Profilblöcke 1, 2 sind in jeder Umfangsrichtung jeweils gemeinsam von einer Schrägrille 4 begrenzt (Schrägrillen 4 lediglich angedeutet), wobei die Schrägrillen 4, in Draufsicht betrachtet, bezüglich der Umfangsrichtung gleichsinnig zueinander geneigt verlaufen und beim Abrollen des Reifens bei Vorwärtsfahrt (Pfeil R) zuerst mit ihren laufstreifeninnenseitigen Enden in die Bodenaufstandsfläche eintreten.

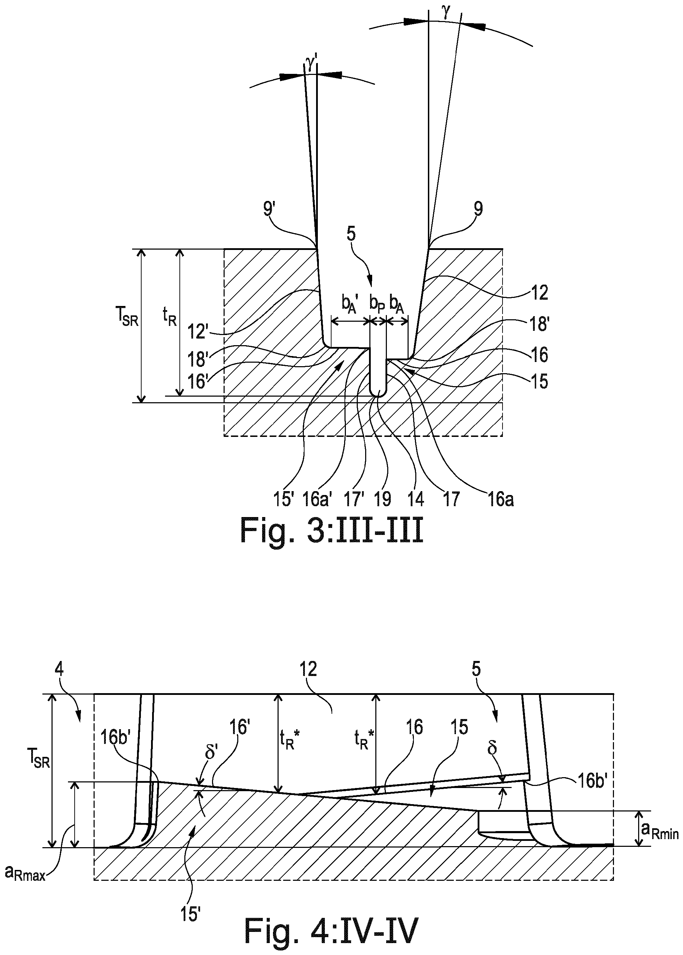

Die Schrägrillen 4 weisen jeweils eine in Draufsicht dem Rillenverlauf folgende, zweifach geknickte Rillenmittellinie m_{SR} auf, verlaufen - in Draufsicht betrachtet und bezogen auf eine die Enden der zugehörigen Rillenmittellinie m_{SR} innerhalb der Bodenaufstandsfläche verbindende gerade Hilfslinie h₁ - zur Umfangsrichtung unter einem Winkel α von 40° bis 80°, sind in radialer Richtung auf die jeweils vorgesehene Profiltiefe T_{SR} (Fig. 3, Fig. 4) von üblicherweise 6,5 mm bis 12,0 mm ausgeführt und weisen eine in Draufsicht senkrecht zur Rillenmittellinie m_{SR} an der Laufstreifenperipherie gemessene, in Richtung Laufstreifenrand zunehmende Breite B_{SR} von 3,0 mm bis 15,0 mm auf. Die Winkel α der Schrägrillen 4 können übereinstimmen oder um bis zu 10° voneinander abweichen.

Zwischen in Umfangsrichtung benachbarten Schrägrillen 4 ist eine den schulterseitigen Profilblock 1 vom halbmittigen Profilblock 2 trennende, weiter laufstreifenaußenseitig befindliche Rille 5 und eine den halbmittigen Profilblock 2 vom mittigen Profilblock 3 trennende, weiter laufstreifeninnenseitig befindliche Rille 6 ausgebildet. Die Rille 6 verläuft, in Draufsicht betrachtet, gerade sowie bezüglich der Umfangsrichtung gegensinnig zu den Schrägrillen 4 geneigt, weist an der Laufstreifenperipherie eine in Draufsicht senkrecht zu ihrer Erstreckungsrichtung ermittelte Breite von 2,0 mm bis 6,0 mm und in radialer Richtung eine maximale Tiefe (Tiefe an der tiefsten Stelle) von 70% bis 100% der Profiltiefe T_{SR} (Fig. 3, Fig. 4) auf.

Die Profilblöcke 1, 2 sind jeweils entlang der Längserstreckung der Schrägrillen 4 langgestreckt, wobei der schulterseitige Profilblock 1 mit vier ihn in seiner Längserstreckung innerhalb der Bodenaufstandsfläche durchquerenden und in die Rille 5 einmündenden Einschnitten 7 und der halbmittige Profilblock 2 mit vier ihn in seiner Längserstreckung durchquerenden und in die Rillen 5, 6 einmündenden Einschnitten 8 versehen ist. Die Einschnitte 7, 8 weisen jeweils eine Breite von 0,4 mm bis 1,6 mm, insbesondere von bis zu 1,2 mm, sowie in radialer Richtung eine maximale Tiefe von 70% bis 100% der Profiltiefe auf und verleihen den Profilblöcken 1, 2 jeweils Blocksegmente 1a (Profilblock 1), 2a (Profilblock 2).

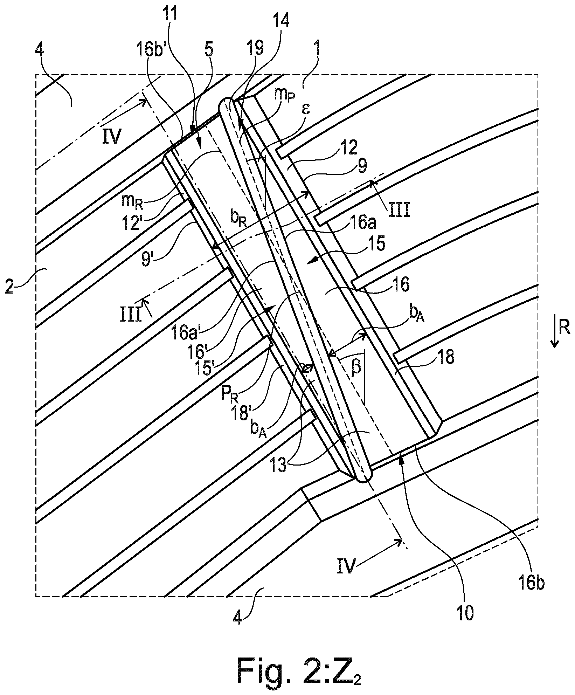

Gemäß Fig. 2 ist die Rille 5 an der Laufstreifenperipherie durch zwei in Draufsicht gerade und parallel zueinander verlaufende Rillenkanten 9, 9' - eine am jeweiligen schulterseitigen Profilblock 1 ausgebildete, laufstreifenaußenseitige Rillenkante 9 und eine am jeweiligen halbmittigen Profilblock 2 ausgebildete, laufstreifeninnenseitige Rillenkante 9' - begrenzt, wobei die Rille 5, in Draufsicht betrachtet, eine dem Rillenverlauf folgende, übereinstimmend zu den Rillenkanten 9, 9' beabstandete Mittellinie m_{R} aufweist und ferner gerade, bezüglich der Umfangsrichtung gegensinnig zu den Schrägrillen 4 geneigt sowie bezogen auf die Mittellinie m_{R} zur Umfangrichtung unter einem Winkel β von 15° bis 40°, insbesondere von 18° bis 35°, verläuft. Die Rille 5 weist ein an der einen angrenzenden Schrägrille 4 liegendes, beim Abrollen des Reifens bei Vorwärtsfahrt (Pfeil R) zuerst in den Untergrund eintretendes, weiter laufstreifenaußenseitig befindliches, einlaufendes Rillenende 10 und ein an der anderen angrenzenden Schrägrille 4 liegendes, weiter laufstreifeninnenseitig befindliches, auslaufendes Rillenende 11 auf. Das Rillende 10 weist - gegenüber dem Rillenende 11 - zur Reifenäquatorialebene (Linie A-A, Fig. 1) einen größeren in axialer Richtung ermittelten, auf das jeweilige Ende der Mittellinie m_{R} bezogenen Abstand auf. Die Rille 5 weist darüber hinaus eine in Draufsicht senkrecht zur Mittellinie m_{R} sowie zwischen den Rillenkanten 9, 9' ermittelte konstante Breite b_{R} von 3,0 mm bis 10,0 mm, eine in radialer Richtung ermittelte, maximale Tiefe t_{R} (Tiefe an der tiefsten Stelle, Fig. 3) von 65% bis 100% der Profiltiefe T_{SR} (Fig. 3, Fig. 4), insbesondere von mindestes 70% der Profiltiefe, besonders bevorzugt mindestens 90% der Profiltiefe T_{SR} und höchstens der um 0,1 mm verringerten Profiltiefe T_{SR}, und - in Draufsicht betrachtet und jeweils bezogen auf einen mittig auf ihrer Mittellinie m_{R} liegenden Punkt P_{R} - zum nächstliegenden seitlichen Rand der Bodenaufstandsfläche (Fig. 1: rechte Linie L) einen an der Laufstreifenperipherie in axialer Richtung ermittelten Abstand a_{R} (Fig. 1) von 10% bis 35%, insbesondere von bis zu 25%, bevorzugt von 15% bis 20%, der Breite B (Fig. 1) der Bodenaufstandsfläche auf.

Gemäß Fig. 2 und Fig. 3 weist die Rille 5 eine an die Rillenkante 9 anschließende Rillenflanke 12, eine an die Rillenkante 9' anschließende Rillenflanke 12', einen Rillengrund 13 (Fig. 2) und einen einschnittartigen Rillenpfad 14 auf.

Gemäß Fig. 3 verlaufen die Rillenflanken 12, 12', im in Draufsicht senkrecht zur Mittellinie m_{R} ausgerichteten Querschnitt betrachtet (vergl. Lage der Linie III-III in Fig. 2), gerade sowie zur radialen Richtung unter einem konstanten Winkel γ (Rillenflanke 12), γ' (Rillenflanke 12') von jeweils 0° bis 12°, insbesondere von jeweils 2° bis 8°, wobei der Winkel γ vorzugsweise um 2° bis 6° größer ist als der Winkel γ'.

Wie Fig. 2 zeigt, verläuft der Rillenpfad 14, in Draufsicht betrachtet, gerade sowie schräg durch die Rille 5 hindurch und mündet daher in die Schrägrillen 4 ein, wobei der Rillenpfad 14 den Rillengrund 13 teilt sowie, in Draufsicht betrachtet, die Mittellinie m_{R} einmal passiert.

Wie Fig. 2 in Verbindung mit Fig. 4 zeigt, befindet sich in der Rille 5 eine an der Rillenflanke 12 sowie entlang der einen Seite des Rillenpfads 14 (Fig. 2) ausgebildete, keilförmige Grundanhebung 15 und eine an der Rillenflanke 12' (in Fig. 4 nicht sichtbar) sowie entlang der anderen Seite des Rillenpfads 14 (Fig. 2) ausgebildete, keilförmige Grundanhebung 15', sodass die Grundanhebung 15 von der Grundanhebung 15' durch den Rillenpfad 14 getrennt ist (Fig. 2). Der Rillenpfad 14 verläuft daher zwischen der Grundanhebung 15 und der Grundanhebung 15' (Fig. 2, Fig. 3).

Gemäß Fig. 2 sind die Grundanhebungen 15, 15', in Draufsicht betrachtet, bezüglich des Punkts P_{R} punktsymmetrisch zueinander ausgeführt, sodass die eine der Grundanhebungen 15, 15' durch eine 180°-Drehung um eine in radialer Richtung durch den Punkt P_{R} verlaufende Achse auf die jeweils andere Grundanhebung 15, 15' abbildbar ist.

Wie Fig. 2 in Kombination mit Fig. 3 zeigt, sind die Grundanhebungen 15, 15' in radialer Richtung jeweils durch eine in Draufsicht (Fig. 2) in Erstreckungsrichtung der Rille 5 langgezogene, rechtwinkelig-dreieckige Außenfläche 16 (Grundanhebung 15), 16' (Grundanhebung 15') und zum Rillenpfad 14 jeweils durch eine Seitenfläche 17 (Grundanhebung 15, Fig. 3), 17' (Grundanhebung 15', Fig. 3) begrenzt, wobei die Außenflächen 16, 16' gemeinsam den Rillengrund 13 (Fig. 2) der Rille 5 bilden.

Gemäß Fig. 2 ist die Schrägstellung des Rillenpfads 14 relativ zur Rille 5 derart, dass der Rillenpfad 14 relativ zur Umfangsrichtung weniger stark geneigt ist als die Rille 5, wodurch die Außenfläche 16 der Grundanhebung 15 in Richtung auslaufendes Rillenende 11 und die Außenfläche 16' der Grundanhebung 15' in Richtung einlaufendes Rillenende 10 ausläuft.

Die Außenfläche 16, 16' weist eine die Dreieckbasis bildende, entlang des Rillenpfads 14 sowie in Draufsicht gerade verlaufende Begrenzungskante 16a (Außenfläche 16), 16a' (Außenfläche 16') auf. Die Außenflächen 16 weist ferner am einlaufenden Rillende 10 eine an die Begrenzungskante 16a anschließende, an der jeweiligen Querrille 4 liegende, parallel zur Laufstreifenperipherie verlaufende Begrenzungskante 16b auf. Die Außenfläche 16' weist ferner am auslaufenden Rillenende 11 eine an die Begrenzungskante 16a' anschließende, an der entsprechenden Querrille 4 liegende, parallel zur Laufstreifenperipherie verlaufende Begrenzungskante 16b' auf.

Die Außenfläche 16, 16' erscheint gemäß Fig. 3, in in Draufsicht senkrecht zur Mittellinie m_{R} verlaufenden Querschnitten betrachtet (vergl. Lage der Linie III-III in Fig. 2), als gerade und parallel zur Laufstreifenperipherie verlaufende Linie und weist, in diesen Querschnitten betrachtet, eine parallel zur Laufstreifenperipherie gemessene Breite b_{A} (Außenfläche 16), b_{A}' (Außenfläche 16') auf, wobei die Breite b_{A}, b_{A}' gemäß Fig. 2 - entsprechend der Dreieckform der Außenfläche 16, 16' - ausgehend von der Begrenzungskante 16b, 16b' entlang der jeweilige Begrenzungskante 16a, 16a' kontinuierlich (also gleichmäßig) abnimmt. Die Größen der Breite b_{A}, b_{A}' ändern sich daher über die in Draufsicht vorliegende Längserstreckung der Rille 5 zueinander entgegengesetzt.

Gemäß Fig. 4 ist die Außenfläche 16, 16', in in Draufsicht parallel zur Mittellinie m_{R} verlaufenden Längsschnitten betrachtet (vergl. Lage der Linie IV-IV in Fig. 2), relativ zur Laufstreifenperipherie unter einem konstanten Winkel δ (Außenfläche 16), δ' (Außenfläche 16') geneigt, wobei die Neigung derart ist, dass die Außenfläche 16, 16' ausgehend von der jeweiligen Begrenzungskante 16b, 16b' über die Erstreckung der jeweiligen Begrenzungskante 16a, 16a' (Fig. 2) radial nach Innen abfällt. Die Rille 5 weist somit im Bereich der Außenfläche 16, 16' eine in radialer Richtung ermittelte Tiefe t_{R}* auf, welche ausgehend von der jeweiligen Begrenzungskante 16b, 16b' über die Erstreckung der jeweiligen Begrenzungskante 16a, 16a' (Fig. 2) - und somit mit abnehmender Breite b_{A} (vergl. Fig. 2) - kontinuierlich zunimmt. Die Außenfläche 16, 16' sowie die Begrenzungskante 16a, 16a' (Fig. 2) weisen jeweils an ihren an der Begrenzungskante 16b, 16b' liegenden Ende zum Niveau der Profiltiefe T_{SR} ihren größten Abstand a_{Rmax} von 10% bis 90%, insbesondere von 15% bis 70%, bevorzugt von 20% bis 50%, der Profiltiefe T_{SR} und am der Begrenzungskante 16b, 16b' abgewandten Ende zum Niveau der Profiltiefe T_{SR} ihren kleinsten Abstand a_{Rmin} von bis zu 60%, bevorzugt von bis zu 50%, des größten Abstands a_{Rmax} auf.

Zwischen den Rillenflanken 12, 12' und den Außenflächen 16, 16' der Grundanhebung 15, 15' ist jeweils eine Übergangsrundung 18, 18' (Fig. 2, Fig. 3) ausgebildet, welche gemäß Fig. 3, im in Draufsicht senkrecht zur Mittellinie m_{R} verlaufenden Querschnitt betrachtet, tangential an die jeweilige Außenfläche 16, 16' und tangential an die jeweilige Rillenflanke 12, 12' anschließt.

Wie Fig. 2 in Kombination mit Fig. 3 zeigt, ist der Rillenpfad 14 durch die bereits erwähnten, an den Grundanhebungen 15, 15' ausgebildeten Seitenflächen 17, 17' (Fig. 3) und einen zwischen den Seitenflächen 17, 17' verlaufenden Rillengrund 19 begrenzt. Gemäß Fig. 2 weist der Rillenpfad 14 eine in Draufsicht seinem Verlauf folgende, übereinstimmend zu den Begrenzungskanten 16a, 16a' beabstandete, gerade verlaufende Mittellinie m_{P} auf, welche - bezüglich der Umfangsrichtung gleichsinnig zur Mittellinie m_{R} der Rille 5 geneigt ist. Der Rillenpfad 14 verläuft - bezogen auf die Mittellinie m_{P} - zur Umfangsrichtung unter einem Winkel ε, welcher kleiner ist als der Winkel β der Rille 5, wobei der Winkel ε derart auf den Winkel β abgestimmt ist, dass - wie bereits erwähnt - die Außenflächen 16, 16' entlang der Begrenzungskanten 16a, 16a' auslaufen. Der Rillenpfad 14 verläuft auf der bereits erwähnten maximale Tiefe t_{R} (Fig. 3) und weist eine in Draufsicht senkrecht zur Mittellinie m_{P} ermittelte auf die Begrenzungskanten 16a, 16a' bezogene konstante Breite b_{P} (Fig. 3) von 0,5 mm bis 1,5 mm, insbesondere von 0,8 mm bis 1,2 mm, auf, wobei sich die Breite b_{P}, im in Draufsicht senkrecht zur Mittellinie m_{P} verlaufenden Querschnitt betrachtet (vergl. Lage der Linie III-III in Fig. 2), auf zwei in radialer Richtung durch die Begrenzungskanten 16a, 16a' verlaufende Linien bezieht. Gemäß Fig. 3 verlaufen die Seitenflächen 17, 17', im zuletzt erwähnten Querschnitt betrachtet, gerade sowie in radialer Richtung oder zu dieser unter einem Winkel von bis zu 2°. Der Rillengrund 19 verläuft, im zuletzt erwähnten Querschnitt betrachtet, U-förmig, und ist symmetrisch bezüglich der Mittellinie m_{P} (Fig. 2) ausgeführt.

Die Erfindung ist auf das beschriebene Ausführungsbeispiel nicht beschränkt.

Insbesondere muss der Laufstreifen nicht laufrichtungsgebunden ausgeführt sein.

Die Schrägrillen können durchgehend gebogen oder gerade verlaufen. Zwischen in Umfangsrichtung aufeinanderfolgenden Schrägrillen verläuft zumindest eine erfindungsgemäß gestaltete Rille.

Die zwischen den Schrägrillen verlaufenden Rillen, in welchen die Grundanhebungen und der Rillenpfad ausgebildet sind, können beliebige Profilblöcke voneinander trennen. Bevorzugter Weise sind diese Rillen in jeder Laufstreifenhälfte vorgesehen. Die Rillen können auch in Umfangsrichtung oder bezüglich der Umfangsrichtung gleichsinnig zu den Schrägrillen geneigt verlaufen.

Die Außenflächen der Grundanhebungen müssen nicht dreieckig ausführt sein.

Der Rillenpfad kann, in Draufsicht betrachtet, insbesondere durchgehend gebogen (bogenförmig) verlaufen.

### Bezugszeichenliste

- 1: schulterseitiger Profilblock
- 1': schulterseitige Profilblockreihe
- 1a: Blocksegment
- 2: halbmittiger Profilblock
- 2a: Blocksegment
- 3: mittiger Profilblock
- 4: Schrägrille
- 5: Rille
- 6: Rille
- 7: Einschnitt
- 8: Einschnitt
- 9: Rillenkante
- 9': Rillenkante
- 10: einlaufendes Rillenende
- 11: auslaufendes Rillenende
- 12, 12': Rillenflanke
- 13: Rillengrund
- 14: Rillenpfad
- 15, 15': Grundanhebung
- 16, 16': Außenfläche
- 16a, 16a': Begrenzungskante
- 16b, 16b': Begrenzungskante
- 17, 17': Seitenfläche
- 18, 18': Übergangsrundung
- 19: Rillengrund
- A-A: Linie (Reifenäquatorialebene)
- a_{R}: Abstand
- a_{Rmax}: größter Abstand
- a_{Rmin}: kleinster Abstand
- B, B_{SR}, b_{A}, b_{A}', b_{P}, b_{R}: Breite
- h₁: Hilfslinie
- L: Linie (seitlicher Rand der Bodenaufstandsfläche)
- m_{P}: Mittellinie
- m_{SR}: Rillenmittellinie
- m_{R}: Mittellinie
- P_{R}: Punkt
- R: Pfeil (Abrollrichtung)
- t_{R}: maximale Tiefe
- t_{R}: Tiefe
- T_{SR}: Profiltiefe
- Z₂: Detail
- α, β, γ, γ', δ, δ', ε: Winkel

## Patentansprüche

1. Fahrzeugluftreifen mit einem Laufstreifen mit Profilblöcken (1, 2, 3), welche von auf Profiltiefe (T_{SR}) reichenden Schrägrillen (4) und von Rillen (5, 6) begrenzt sind, welche Rillen (5, 6) zwischen in Umfangsrichtung aufeinanderfolgenden Schrägrillen (4) ausgebildet sind, insbesondere bezüglich der Umfangsrichtung gegensinnig zu den Schrägrillen (4) geneigt verlaufen und an den Schrägrillen (4) Rillenenden (10, 11) aufweisen und zu welchen Rillen (5) gehören, die jeweils eine Breite (b_{R}) von 3,0 mm bis 10,0 mm, eine maximale Tiefe (t_{R}) von 65% bis 100% der Profiltiefe (T_{SR}), von der Laufstreifenperipherie ausgehende Rillenflanken (12, 12') und einen in ihrer maximalen Tiefe (t_{R}) verlaufenden, in die Schrägrillen (4) einmündenden Rillenpfad (14) aufweisen, welcher sich in Draufsicht schräg durch die jeweilige Rille (5) hindurcherstreckt und zwischen einer entlang der einen Rillenflanke (12) ausgebildeten Grundanhebung (15) und einer entlang der anderen Rillenflanke (12') ausgebildete Grundanhebung (15') verläuft, wobei jede Grundanhebung (15, 15') in radialer Richtung durch eine Außenfläche (16, 16') begrenzt ist, welche, im in Draufsicht senkrecht zur Mittellinie (m_{R}) der Rille (5) verlaufenden Querschnitt betrachtet, parallel zur Laufstreifenperipherie verläuft und eine von dem einen Rillenende (10) zum anderen Rillenende (11) kontinuierlich abnehmende Breite (b_{A}, b_{A}') aufweist,
**dadurch gekennzeichnet,**
**dass** die Außenfläche (16, 16') jeder Grundanhebung (15, 15'), in Längsschnitten der Rille (5) betrachtet, derart relativ zur Laufstreifenperipherie unter einem Winkel (δ, δ') geneigt verläuft, dass die Rille (5) im Bereich der Außenfläche (16, 16') eine in radialer Richtung ermittelte Tiefe (t_{R}*) aufweist, welche mit abnehmender Breite (b_{A}, b_{A}') der Außenfläche (16, 16') kontinuierlich zunimmt.

2. Fahrzeugluftreifen nach Anspruch 1, **dadurch gekennzeichnet, dass** die Außenfläche (16, 16') jeder Grundanhebung (15, 15') an jenem Rillenende (10, 11), an welchem die Tiefe (t_{R}*) der Rille (5) am kleinsten ist, zum Niveau der Profiltiefe (T_{SR}) einen in radialer Richtung ermittelten größten Abstand (a_{Rmax}) von 10% bis 90%, insbesondere von 15% bis 70%, bevorzugt von 20% bis 50%, der Profiltiefe (T_{SR}) aufweist.

3. Fahrzeugluftreifen nach Anspruch 2, **dadurch gekennzeichnet, dass** die Außenfläche (16, 16') jeder Grundanhebung (15, 15') an jenem Rillenende (10, 11), an welchem die Tiefe (t_{R}*) der Rille (5) am größten ist, zum Niveau der Profiltiefe (T_{SR}) einen in radialer Richtung ermittelten kleinsten Abstand (a_{Rmin}) von bis zu 60%, bevorzugt von bis zu 50%, des größten Abstands (a_{Rmax}) aufweist.

4. Fahrzeugluftreifen nach einem der Ansprüche 1 bis 3, **dadurch gekennzeichnet, dass** der Rillenpfad (14), in Draufsicht betrachtet, gerade verläuft.

5. Fahrzeugluftreifen nach Anspruch 4, **dadurch gekennzeichnet, dass** sich der Rillenpfad (14) derart schräg durch die Rille (5) hindurcherstreckt, dass die Außenfläche (16, 16') jeder Grundanhebung (15, 15'), in Draufsicht betrachtet, die Form eines rechtwinkeligen Dreieckes aufweist.

6. Fahrzeugluftreifen nach einem der Ansprüche 1 bis 5, **dadurch gekennzeichnet, dass** die Rille (5) an der Laufstreifenperipherie eine laufstreifenaußenseitige Rillenkante (9) und eine laufstreifeninnenseitige Rillenkante (8) sowie ferner ein laufstreifenaußenseitiges Rillenende (10) und ein laufstreifeninnenseitiges Rillende (11) aufweist,
- wobei die Breite (b_{A}) der Außenfläche (16) der Grundanhebung (15), welche entlang der von der laufstreifenaußenseitigen Rillenkante (9) ausgehenden Rillenflanke (12) ausgebildet ist, vom laufstreifenaußenseitigen Rillenende (10) zum laufstreifeninnenseitigen Rillende (11) abnimmt und
- wobei die Breite (b_{A}') der Außenfläche (16') der Grundanhebung (15'), welche entlang der von der laufstreifeninnenseitigen Rillenkante (9') ausgehenden Rillenflanke (12') ausgebildet ist, vom laufstreifeninnenseitigen Rillenende (11) zum laufstreifenaußenseitigen Rillenende (10) abnimmt.

7. Fahrzeugluftreifen nach Anspruch 6, **dadurch gekennzeichnet, dass** der Laufstreifen laufrichtungsgebunden ausgeführt ist, wobei das laufstreifenaußenseitige Rillenende (10) ein beim Abrollen des Reifens bei Vorwärtsfahrt (Pfeil R) zuerst in den Untergrund eintretendes, einlaufendes Rillenende (10) und das laufstreifeninnenseitige Rillenende (11) ein auslaufendes Rillenende (11) ist.

8. Fahrzeugluftreifen nach einem der Ansprüche 1 bis 7, **dadurch gekennzeichnet, dass** die Rille (5) und der Rillenpfad (14), in Draufsicht betrachtet, bezogen auf ihre Mittellinien (m_{R}, mₚ), gerade und bezüglich der Umfangsrichtung gleichsinnig zueinander geneigt verlaufen.

9. Fahrzeugluftreifen nach Anspruch 8, **dadurch gekennzeichnet, dass** die Rille (5) und der Rillenpfad (14), in Draufsicht betrachtet, bezogen auf ihre Mittellinien (m_{R}, m_{P}), zur Umfangsrichtung jeweils unter einem Winkel (β, ε) verlaufen, wobei der Winkel (ε), unter welchem der Rillenpfad (14) zur Umfangsrichtung verläuft, kleiner ist als der Winkel (β), unter welchem die Rille (5) zur Umfangsrichtung verläuft.

10. Fahrzeugluftreifen nach Anspruch 9, **dadurch gekennzeichnet, dass** der Winkel (β), unter welchem die Rille (5) zur Umfangsrichtung verläuft, 15° bis 40°, insbesondere von 18° bis 35°, beträgt.

11. Fahrzeugluftreifen nach einem der Ansprüche 1 bis 10, **dadurch gekennzeichnet, dass** die Außenfläche (16, 16') jeder Grundanhebung (15, 15') bis zum Rillenpfad (14) reicht und an diesem eine Begrenzungskante (16a, 16a') aufweist, entlang welcher die Breite (b_{A}, b_{A}') der Außenfläche (16, 16') kontinuierlich abnimmt.

12. Fahrzeugluftreifen nach Anspruch 11, **dadurch gekennzeichnet, dass** der Rillenpfad (14) eine in Draufsicht senkrecht zu seiner Mittellinie (m_{P}) ermittelte, auf die Begrenzungskanten (16a, 16a') bezogene konstante Breite (b_{P}) von 0,5 mm bis 1,5 mm, insbesondere von 0,8 mm bis 1,2 mm, aufweist.

13. Fahrzeugluftreifen nach einem der Ansprüche 1 bis 12, **dadurch gekennzeichnet, dass** die Grundanhebungen (15, 15'), in Draufsicht betrachtet, bezüglich des Mittelpunkts (P_{R}) der Mittellinie (m_{P}) des Rillenpfads (14) punktsymmetrisch ausgeführt sind.

14. Fahrzeugluftreifen nach einem der Ansprüche 1 bis 13, **dadurch gekennzeichnet, dass** zu den von den Rillen (5) begrenzten Profilblöcken (1, 2, 3) schulterseitige Profilblöcke (1) gehören, wobei die schulterseitigen Profilblöcke (1) vorzugsweise mit in Draufsicht bezüglich der Umfangsrichtung gleichsinnig zu den Schrägrillen (4) geneigt verlaufenden, in die Rillen (5) einmündenden Einschnitten (7) mit einer Breite von 0,4 mm bis 1,6 mm, insbesondere von bis zu 1,2 mm, und einer maximalen Tiefe von 70% bis 100% der Profiltiefe versehen sind.

15. Fahrzeugluftreifen nach einem der Ansprüche 1 bis 14, **dadurch gekennzeichnet, dass** zu den von den Rillen (5) begrenzten Profilblöcken (1, 2, 3) Profilblöcke (1, 2) gehören, welche in jeder Umfangsrichtung gemeinsam von einer der Schrägrillen (4) begrenzt sind, wobei zwischen den Schrägrillen (4) eine der Rillen (5) verläuft, wobei die Profilblöcke (1, 2) vorzugsweise mit in Draufsicht bezüglich der Umfangsrichtung gleichsinnig zu den Schrägrillen (4) geneigt verlaufenden, in die Rillen (5) einmündenden Einschnitten (7) mit einer Breite von 0,4 mm bis 1,6 mm, insbesondere von bis zu 1,2 mm, und einer maximalen Tiefe von 70% bis 100% der Profiltiefe versehen sind.

## Claims

1. Pneumatic vehicle tyre with a tread having profile blocks (1, 2, 3), which are delimited by oblique grooves (4), reaching to the profile depth (T_{SR}), and by grooves (5, 6) which grooves (5, 6) are formed between circumferentially successive oblique grooves (4), in particular run such that they are inclined in opposite directions in relation to the oblique grooves (4) with respect to the circumferential direction, and have groove ends (10, 11) at the oblique grooves (4) and include grooves (5) which respectively have a width (b_{R}) of 3.0 mm to 10.0 mm, a maximum depth (t_{R}) of 65% to 100% of the profile depth (T_{SR}), groove flanks (12, 12') extending from the tread periphery and a groove path (14), which runs at the maximum depth (t_{R}) of the grooves, merges into the oblique grooves (4) and extends in plan view obliquely through the respective groove (5) and runs between a base elevation (15) formed along the one groove flank (12) and a base elevation (15') formed along the other groove flank (12'), wherein each base elevation (15, 15') is delimited in the radial direction by an outer surface (16, 16') which, when considered in the cross section running in plan view perpendicularly to the centre line (m_{R}) of the groove (5), runs parallel to the tread periphery and has a width (b_{A}, b_{A}') decreasing continuously from the one groove end (10) to the other groove end (11),
**characterized**
**in that**, when considered in longitudinal sections of the grooves (5), the outer surface (16, 16') of each base elevation (15, 15') runs inclined relative to the tread periphery at an angle (δ, δ') in such a way that the groove (5) has in the region of the outer surface (16, 16') a depth (t_{R}*), determined in the radial direction, which increases continuously with increasing width (b_{A}, b_{A}') of the outer surface (16, 16').

2. Pneumatic vehicle tyre according to Claim 1, **characterized in that** the outer surface (16, 16') of each base elevation (15, 15') has at that groove end (10, 11) at which the depth (t_{R}*) of the groove (5) is the smallest a greatest distance (a_{Rmax}) in relation to the level of the profile depth (T_{SR}) and determined in the radial direction of 10% to 90%, in particular of 15% to 70%, preferably of 20% to 50%, of the profile depth (T_{SR}).

3. Pneumatic vehicle tyre according to Claim 2, **characterized in that** the outer surface (16, 16') of each base elevation (15, 15') has at that groove end (10, 11) at which the depth (t_{R}*) of the groove (5) is the greatest a smallest distance (a_{Rmin}) in relation to the level of the profile depth (T_{SR}) and determined in the radial direction of up to 60%, preferably of up to 50%, of the greatest distance (a_{Rmax}).

4. Pneumatic vehicle tyre according to one of Claims 1 to 3, **characterized in that**, when considered in plan view, the groove path (14) runs straight.

5. Pneumatic vehicle tyre according to Claim 4, **characterized in that** the groove path (14) extends obliquely through the groove (5) in such a way that, when considered in plan view, the outer surface (16, 16') of each base elevation (15, 15') has the form of a right-angled triangle.

6. Pneumatic vehicle tyre according to one of Claims 1 to 5, **characterized in that** the groove (5) has at the tread periphery a groove edge (9) on the outer side of the tread and a groove edge (8) on the inner side of the tread and also has a groove end (10) on the outer side of the tread and a groove end (11) on the inner side of the tread,
- wherein the width (b_{A}) of the outer surface (16) of the base elevation (15) which is formed along the groove flank (12) extending from the groove edge (9) on the outer side of the tread decreases from the groove end (10) on the outer side of the tread to the groove end (11) on the inner side of the tread and
- wherein the width (b_{A}') of the outer surface (16') of the base elevation (15') which is formed along the groove flank (12') extending from the groove edge (9') on the inner side of the tread decreases from the groove end (11) on the inner side of the tread to the groove end (10) on the outer side of the tread.

7. Pneumatic vehicle tyre according to Claim 6, **characterized in that** the tread is of a directional design, wherein the groove end (10) on the outer side of the tread is a leading groove end (10), arriving first at ground level when the tyre is rolling during forward travel (arrow R), and the groove end (11) on the inner side of the tread is a trailing groove end (11).

8. Pneumatic vehicle tyre according to one of Claims 1 to 7, **characterized in that**, when considered in plan view, the groove (5) and the groove path (14) run straight with respect to their centre lines (m_{R}, m_{P}) and inclined in the same direction in relation to one another with respect to the circumferential direction.

9. Pneumatic vehicle tyre according to Claim 8, **characterized in that**, when considered in plan view, the groove (5) and the groove path (14) respectively run at an angle (β, ε), with respect to their centre lines (m_{R}, m_{P}), relative to the circumferential direction, wherein the angle (ε) at which the groove path (14) runs relative to the circumferential direction is smaller than the angle (β) at which the groove (5) runs relative to the circumferential direction.

10. Pneumatic vehicle tyre according to Claim 9, **characterized in that** the angle (β) at which the groove (5) runs relative to the circumferential direction is 15° to 40°, in particular from 18° to 35°.

11. Pneumatic vehicle tyre according to one of Claims 1 to 10, **characterized in that** the outer surface (16, 16') of each base elevation (15, 15') reaches up to the groove path (14) and has at the latter a delimiting edge (16a, 16a') along which the width (b_{A}, b_{A}') of the outer surface (16, 16') decreases continuously.

12. Pneumatic vehicle tyre according to Claim 11, **characterized in that** the groove path (14) has a constant width (b_{P}), determined in plan view perpendicularly to its centre line (m_{P}) and with respect to the delimiting edges (16a, 16a'), of 0.5 mm to 1.5 mm, in particular of 0.8 mm to 1.2 mm.

13. Pneumatic vehicle tyre according to one of Claims 1 to 12, **characterized in that**, when considered in plan view, the base elevations (15, 15') are of a point-symmetrical design with respect to the centre point (P_{R}) of the centre line (m_{P}) of the groove path (14).

14. Pneumatic vehicle tyre according to one of Claims 1 to 13, **characterized in that** the profile blocks (1, 2, 3) delimited by the grooves (5) include shoulder-side profile blocks (1), wherein the shoulder-side profile blocks (1) are preferably provided with sipes (7), which run in plan view inclined in the same direction in relation to the oblique grooves (4) with respect to the circumferential direction, merge into the grooves (5) and have a width of 0.4 mm to 1.6 mm, in particular of up to 1.2 mm, and a maximum depth of 70% to 100% of the profile depth.

15. Pneumatic vehicle tyre according to one of Claims 1 to 14, **characterized in that** the profile blocks (1, 2, 3) delimited by the grooves (5) include profile blocks (1, 2) which are delimited in each circumferential direction jointly by one of the oblique grooves (4), wherein one of the grooves (5) runs between the oblique grooves (4), wherein the profile blocks (1, 2) are preferably provided with sipes (7), which run in plan view inclined in the same direction in relation to the oblique grooves (4) with respect to the circumferential direction, merge into the grooves (5) and have a width of 0.4 mm to 1.6 mm, in particular of up to 1.2 mm, and a maximum depth of 70% to 100% of the profile depth.

## Revendications

1. Pneumatique de véhicule avec une bande de roulement avec des blocs de profil (1, 2, 3) qui sont délimités par des rainures obliques (4) s'étendant jusqu'à la profondeur de profil (T_{SR}) et par des rainures (5, 6), lesquelles rainures (5, 6) sont réalisées entre des rainures obliques (4) successives dans la direction circonférentielle, s'étendent notamment de manière inclinée par rapport à la direction circonférentielle en sens inverse par rapport aux rainures obliques (4) et présentent des extrémités de rainures (10, 11) sur les rainures obliques (4), et qui comprennent des rainures (5) qui présentent chacune une largeur (b_{R}) de 3,0 mm à 10,0 mm, une profondeur maximale (t_{R}) de 65 % à 100 % de la profondeur de profil (T_{SR}), des flancs de rainure (12, 12') partant de la périphérie de la bande de roulement et un trajet de rainure (14) s'étendant à leur profondeur maximale (t_{R}), débouchant dans les rainures obliques (4), lequel s'étend, en vue de dessus, obliquement à travers la rainure respective (5) et s'étend entre une élévation de base (15) réalisée le long d'un flanc de rainure (12) et une élévation de base (15') réalisée le long de l'autre flanc de rainure (12'), chaque élévation de base (15, 15') étant délimitée dans la direction radiale par une surface extérieure (16, 16') qui, considérée en coupe transversale s'étendant en vue de dessus perpendiculairement à la ligne médiane (m_{R}) de la rainure (5), s'étend parallèlement à la périphérie de la bande de roulement et présente une largeur (b_{A}, b_{A}') diminuant continuellement d'une extrémité de rainure (10) à l'autre extrémité de rainure (11),
**caractérisé en ce que**
la surface extérieure (16, 16') de chaque élévation de base (15, 15'), considérée dans des coupes longitudinales de la rainure (5), s'étend de manière inclinée par rapport à la périphérie de la bande de roulement selon un angle (δ, δ') tel que la rainure (5) présente dans la zone de la surface extérieure (16, 16') une profondeur (t_{R}*) déterminée dans la direction radiale, qui augmente de manière continue lorsque la largeur (b_{A}, b_{A}') de la surface extérieure (16, 16') diminue.

2. Pneumatique de véhicule selon la revendication 1, **caractérisé en ce que** la surface extérieure (16, 16') de chaque élévation de base (15, 15') présente, à l'extrémité de rainure (10, 11) où la profondeur (t_{R}*) de la rainure (5) est la plus petite, par rapport au niveau de la profondeur de profil (T_{SR}), une distance maximale (a_{Rmax}), déterminée dans la direction radiale, de 10 % à 90 %, notamment de 15 % à 70 %, de préférence de 20 % à 50 %, de la profondeur de profil (T_{SR}).

3. Pneumatique de véhicule selon la revendication 2, **caractérisé en ce que** la surface extérieure (16, 16') de chaque élévation de base (15, 15') présente, à l'extrémité de rainure (10, 11) où la profondeur (t_{R}*) de la rainure (5) est la plus grande, par rapport au niveau de la profondeur de profil (T_{SR}), une distance minimale (a_{Rmin}), déterminée dans la direction radiale, de jusqu'à 60 %, de préférence jusqu'à 50 %, de la distance maximale (a_{Rmax}).

4. Pneumatique de véhicule selon l'une quelconque des revendications 1 à 3, **caractérisé en ce que** le trajet de rainure (14), considéré en vue de dessus, s'étend de manière rectiligne.

5. Pneumatique de véhicule selon la revendication 4, **caractérisé en ce que** le trajet de rainure (14) s'étend obliquement à travers la rainure (5) de telle sorte que la surface extérieure (16, 16') de chaque élévation de base (15, 15'), considérée en vue de dessus, présente la forme d'un triangle rectangle.

6. Pneumatique de véhicule selon l'une quelconque des revendications 1 à 5, **caractérisé en ce que** la rainure (5) présente, à la périphérie de la bande de roulement, un bord de rainure (9) côté extérieur de la bande de roulement et un bord de rainure (8) côté intérieur de la bande de roulement, ainsi qu'en outre une extrémité de rainure (10) côté extérieur de la bande de roulement et une extrémité de rainure (11) côté intérieur de la bande de roulement,
- la largeur (b_{A}) de la surface extérieure (16) de l'élévation de base (15), qui est réalisée le long du flanc de rainure (12) partant du bord de rainure (9) côté extérieur de la bande de roulement, diminuant de l'extrémité de rainure (10) côté extérieur de la bande de roulement vers l'extrémité de rainure (11) côté intérieur de la bande de roulement et
- la largeur (b_{A}') de la surface extérieure (16') de l'élévation de base (15'), qui est réalisée le long du flanc de rainure (12') partant du bord de rainure (9') côté intérieur de la bande de roulement, diminuant de l'extrémité de rainure (11) côté intérieur de la bande de roulement vers l'extrémité de rainure (10) côté extérieur de la bande de roulement.

7. Pneumatique de véhicule selon la revendication 6, **caractérisé en ce que** la bande de roulement est conçue sous forme directionnelle, l'extrémité de rainure (10) côté extérieur de la bande de roulement étant une extrémité de rainure entrante (10) qui entre en premier dans le sol lors du roulement du pneu en marche avant (flèche R), et l'extrémité de rainure (11) côté intérieur de la bande de roulement étant une extrémité de rainure sortante (11).

8. Pneumatique de véhicule selon l'une quelconque des revendications 1 à 7, **caractérisé en ce que** la rainure (5) et le trajet de rainure (14), considérés en vue de dessus, par rapport à leurs lignes médianes (m_{R}, mₚ), s'étendent de manière rectiligne et de manière inclinée dans le même sens l'un par rapport à l'autre par rapport à la direction circonférentielle.

9. Pneumatique de véhicule selon la revendication 8, **caractérisé en ce que** la rainure (5) et le trajet de rainure (14), considérés en vue de dessus, par rapport à leurs lignes médianes (m_{R}, mₚ), s'étendent chacun selon un angle (β, ε) par rapport à la direction circonférentielle, l'angle (ε) selon lequel le trajet de rainure (14) s'étend par rapport à la direction circonférentielle étant inférieur à l'angle (β) selon lequel la rainure (5) s'étend par rapport à la direction circonférentielle.

10. Pneumatique de véhicule selon la revendication 9, **caractérisé en ce que** l'angle (β) selon lequel la rainure (5) s'étend par rapport à la direction circonférentielle est de 15° à 40°, notamment de 18° à 35°.

11. Pneumatique de véhicule selon l'une quelconque des revendications 1 à 10, **caractérisé en ce que** la surface extérieure (16, 16') de chaque élévation de base (15, 15') s'étend jusqu'au trajet de rainure (14) et présente, au niveau de celui-ci, un bord de délimitation (16a, 16a') le long duquel la largeur (b_{A}, b_{A}') de la surface extérieure (16, 16') diminue de manière continue.

12. Pneumatique de véhicule selon la revendication 11, **caractérisé en ce que** le trajet de rainure (14) présente une largeur constante (b_{P}), déterminée en vue de dessus perpendiculairement à sa ligne médiane (m_{P}), par rapport aux bords de délimitation (16a, 16a'), de 0,5 mm à 1,5 mm, notamment de 0,8 mm à 1,2 mm.

13. Pneumatique de véhicule selon l'une quelconque des revendications 1 à 12, **caractérisé en ce que** les élévations de base (15, 15'), considérées en vue de dessus, sont réalisées avec une symétrie ponctuelle par rapport au point central (P_{R}) de la ligne médiane (m_{P}) du trajet de rainure (14).

14. Pneumatique de véhicule selon l'une quelconque des revendications 1 à 13, **caractérisé en ce que** les blocs de profil (1, 2, 3) délimités par les rainures (5) comprennent des blocs de profil (1) côté épaulement, les blocs de profil (1) côté épaulement étant de préférence pourvus d'entailles (7) qui, en vue de dessus, s'étendent de manière inclinée dans le même sens que les rainures obliques (4) et débouchent dans les rainures (5), d'une largeur de 0,4 mm à 1,6 mm, notamment jusqu'à 1,2 mm, et d'une profondeur maximale de 70 % à 100 % de la profondeur de profil.

15. Pneumatique de véhicule selon l'une quelconque des revendications 1 à 14, **caractérisé en ce que** les blocs de profil (1, 2, 3) délimités par les rainures (5) comprennent des blocs de profil (1, 2) qui sont délimités conjointement dans chaque direction circonférentielle par l'une des rainures obliques (4), l'une des rainures (5) s'étendant entre les rainures obliques (4), les blocs de profil (1, 2) étant de préférence pourvus d'entailles (7) qui, en vue de dessus, s'étendent de manière inclinée dans le même sens que les rainures obliques (4) et débouchent dans les rainures (5), d'une largeur de 0,4 mm à 1,6 mm, notamment jusqu'à 1,2 mm, et d'une profondeur maximale de 70 % à 100 % de la profondeur de profil.
